Europäisches Patentamt

European Patent Office

Office européen des brevets

(19)

(11) Numéro de publication : **0 095 404**
**B1**

(12) **FASCICULE DE BREVET EUROPÉEN**

(45) Date de publication du fascicule du brevet :
02.01.86

(51) Int. Cl.⁴ : **B 60 T 11/20**

(21) Numéro de dépôt : **83400927.6**

(22) Date de dépôt : **06.05.83**

(54) **Maître-cylindre tandem.**

(30) Priorité : **24.05.82 IT 2144382**

(43) Date de publication de la demande :
**30.11.83 Bulletin 83/48**

(45) Mention de la délivrance du brevet :
**02.01.86 Bulletin 86/01**

(84) Etats contractants désignés :
**DE FR GB SE**

(56) Documents cités :
**FR-A- 2 013 198**
**FR-A- 2 458 435**
**US-A- 3 210 942**
**US-A- 3 938 333**

(73) Titulaire : **BENDITALIA S.p.A.**
**Via Cavalli 53/A**
**I-26013 Crema (IT)**

(72) Inventeur : **Caddedù, Leonardo**
**Via Piacenza 29/A**
**I-26013 Crema (IT)**

(74) Mandataire : **Le Moenner, Gabriel et al**
**SERVICE BREVETS BENDIX 44, Rue François 1er**
**F-75008 Paris (FR)**

Jouve, 18, rue St-Denis, 75001 Paris, France

EP 0 095 404 B1

## Description

L'invention concerne un maître-cylindre tandem du type représenté dans le brevet Français FR-A-2 013 198, selon le préambule de la revendication.

Brièvement, on peut rappeler qu'un tel maître-cylindre comprend un boîtier pourvu d'un alésage borgne dans lequel sont montés coulissants deux pistons : un premier piston situé du côté ouvert de l'alésage et déplaçable manuellement de l'extérieur vers l'intérieur de l'alésage et un second piston situé entre le premier piston et le fond de l'alésage, ce qui définit deux chambres de travail, la première entre les deux pistons et la seconde entre le second piston et le fond de l'alésage, deux ressorts de rappel sollicitant les pistons vers l'extérieur de l'alésage dans une position de repos pour laquelle les deux chambres de travail communiquent avec un réservoir de liquide de freinage, le premier ressort étant interposé entre le fond de l'alésage et le second piston et le second ressort étant interposé entre les deux pistons.

Deux butées sont fixées au boîtier pour définir les positions de repos de l'un et l'autre pistons. Enfin, le second ressort de rappel est monté dans une cage télescopique qui le maintient au repos sous un état de pré-compression déterminé.

Cette disposition a pour but d'assurer au début de la mise en œuvre du maître-cylindre une montée en pression simultanée dans les deux chambres de travail.

En effet, en l'absence d'une telle précompression du second ressort de rappel, la montée en pression dans l'une des chambres aurait lieu avant la montée en pression dans l'autre chambre, selon les raideurs des ressorts.

Dans le document précité le montage du second ressort dans une cage télescopique permet de disposer d'un sous ensemble pré-assemblé dont la manipulation est particulièrement aisée lors de l'assemblage final du maître-cylindre.

On note toutefois que cette cage télescopique est réalisée à partir de deux éléments de formes relativement compliquées et que la non-symétrie de l'ensemble oblige à respecter certaines précautions lors de l'assemblage du maître-cylindre.

L'invention remédie à ces inconvénients en proposant un maître-cylindre du type précité dans lequel la cage télescopique du second ressort de rappel est réalisée au moyen de deux pièces sensiblement identiques en forme de U imbriquées en opposition, le second ressort de rappel étant monté autour desdites pièces.

L'invention sera maintenant décrite en se référant aux dessins annexés dans lesquels :

La Figure 1 est une vue en coupe longitudinale d'un maître-cylindre tandem selon l'invention ;

La Figure 2 est une vue d'ensemble d'un ressort précontraint incorporé au maître-cylindre de la Figure 1, et

La Figure 3 est une vue éclatée du sous-ensemble de la Figure 2.

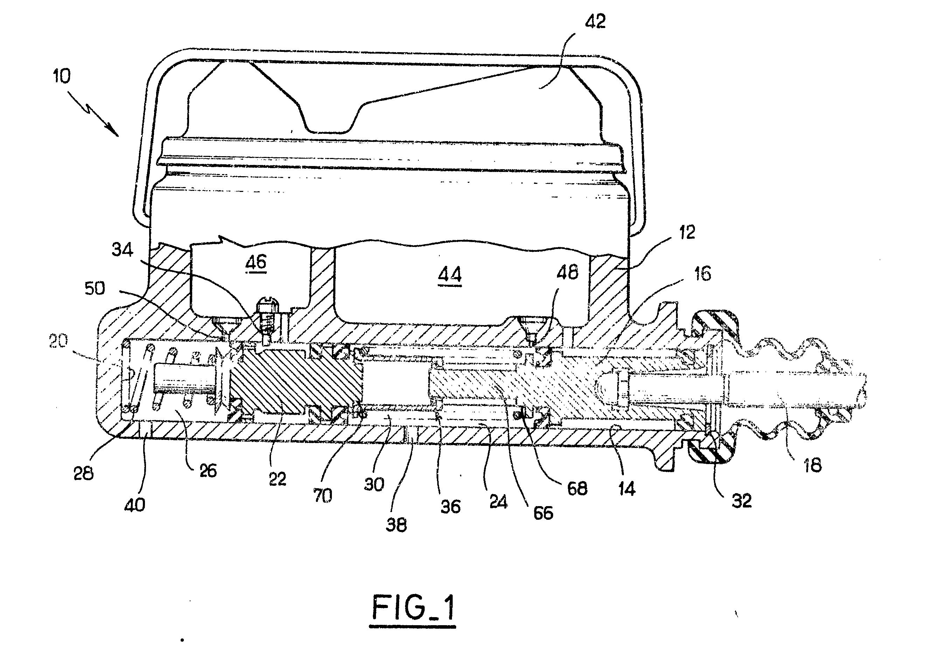

Le maître-cylindre 10 représenté à la Figure 1 comprend un boîtier 12 percé d'un alésage borgne 14. A l'extrémité ouverte de l'alésage est monté coulissant un premier piston 16 déplaçable manuellement vers l'intérieur de l'alésage via une tige de commande 18 au moyen d'une commande à pédale, non représentée.

Entre le premier piston 16 et le fond 20 de l'alésage est monté coulissant un second piston 22 ; ainsi se trouvent définies deux chambres de travail dans l'alésage ; la première 24 entre le premier 16 et le second 22 pistons et la seconde 26 entre le second piston 22 et le fond 20.

Deux ressorts de rappel sollicitent les pistons 16 et 22 vers l'extérieur de l'alésage : le premier 28 est interposé entre le fond 20 de l'alésage 14 et le second piston 22 et le second 30 est interposé entre les deux pistons.

Deux butées solidaires du boîtier 12 sont prévues pour limiter le déplacement des pistons vers l'extérieur : la première 32 est réalisée sous la forme d'un jonc reçu dans une gorge au voisinage de l'extrémité ouverte de l'alésage 14 et la seconde 34 sous la forme d'un téton en saillie à l'intérieur de l'alésage.

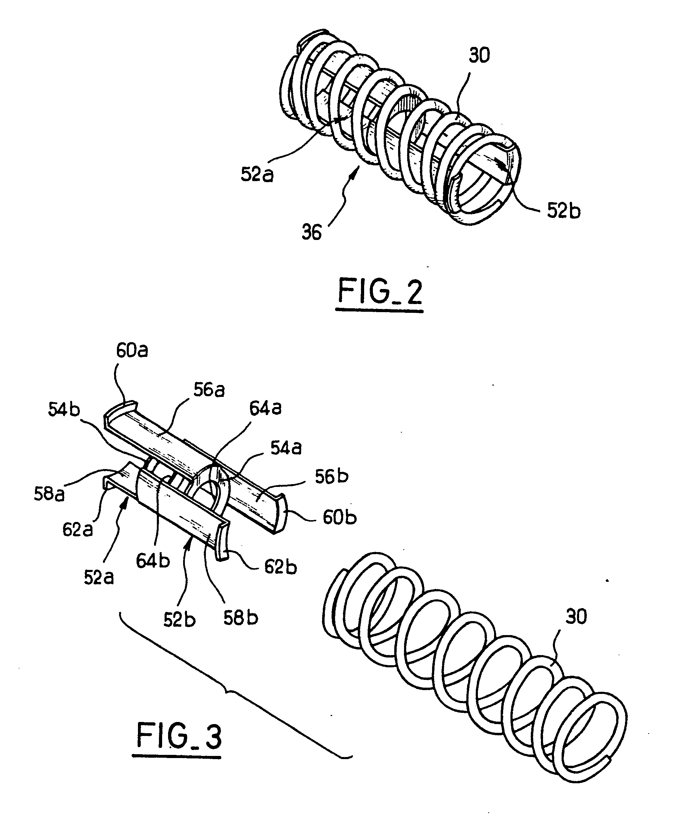

Le ressort de rappel 30 est monté dans une cage télescopique 36 qui le maintient sous un état de pré-compression déterminé, comme il sera vu lors de la description des Figures 2 et 3.

Pour déterminer la description d'ensemble du maître-cylindre, on notera que le boîtier comporte deux orifices de sortie : le premier 38 débouche dans la première chambre de travail 24 et permet la liaison vers un premier circuit de freinage (non représenté) et le second 40 débouche dans la seconde chambre de travail 26 et permet la liaison vers un second circuit de freinage (également non représenté).

Enfin, un réservoir 42 est associé au maître-cylindre 10 de la manière suivante : le réservoir comporte deux compartiments 44 et 46 qui communiquent avec l'alésage 14 via deux passages 48 et 50 qui débouchent dans les chambres de travail 24 et 26 à courte distance des pistons 16 et 22 lorsque ceux-ci occupent leurs positions de repos. De la sorte, le déplacement initial des pistons provoque l'interruption de la communication entre chambres de travail et compartiments du réservoir.

La structure de la cage télescopique 36 est représentée en détail aux Figures 2 et 3.

En particulier, si l'on se reporte à la Figure 3, la cage 36 se compose de deux pièces, sensiblement identiques 52a et 52b en forme générale de U.

Chaque pièce comprend une embase 54a (respectivement 54b), de laquelle s'étendent perpendiculairement deux bras 56a et 58a (respectivement 56b et 58b) qui se terminent par des languettes coudées vers l'extérieur 60a et 62a (respectivement 60b et 62b).

Les deux pièces 52a et 52b sont imbriquées en opposition, l'embase 54a (ou 54b) de chaque pièce étant reçue entre les bras 56b et 58b (ou 56a et 58a) de l'autre pièce.

Le ressort 30 est monté autour des bras des deux pièces et prend appui sur les languettes 60a et 62a à une extrémité et sur les languettes 60b et 62b à l'autre extrémité.

De la sorte, le ressort 30 est maintenu sous un état de pré-compression déterminé ainsi qu'il est souhaité pour obtenir une montée en pression simultanée dans les deux chambres de travail lors de la mise en œuvre du maître-cylindre.

Le sous-ensemble unitaire résultant (Figure 2) forme un groupe indépendant qui peut être inventorié et assemblé séparément. De plus, ce sous-ensemble présente une symétrie qui évite d'observer certaines précautions lors de l'assemblage du maître-cylindre.

On remarquera enfin que les deux embases comportent une ouverture 64a (respectivement 64b).

Si l'on se reporte à nouveau à la Figure 1, on constate que ces ouvertures permettent le passage d'un prolongement axial 66 du premier piston 16, destiné à engager directement le second piston 22 en cas de défaillance du premier circuit de freinage. Naturellement on peut, en variante, prévoir un prolongement axial sur le second piston.

A cette même figure, on remarquera que les deux pistons comportent des épaulements 68 et 70 engagés entre les bras des pièces 52a, 52b de la cage et destinés à empêcher un rapprochement accidentel de ces bras 56a, 58a, 56b, 58b.

## Revendications

1. Maître-cylindre tandem comprenant un boîtier (12) pourvu d'un alésage borgne (14) dans lequel sont montés coulissants un premier piston (16) situé du côté ouvert de l'alésage et déplaçable manuellement de l'extérieur vers l'intérieur de l'alésage et un second piston (22) situé entre le premier piston (16) et le fond (20) de l'alésage, une première chambre de travail (24) étant définie entre les deux pistons et une seconde chambre de travail (26) entre le second piston et le fond (20) de l'alésage, un premier ressort de rappel (28) étant interposé entre le fond de l'alésage et le second piston (22) et un second ressort de rappel (30) étant interposé entre les deux pistons, lesdits ressorts sollicitant les pistons vers l'extérieur de l'alésage en direction de butées (32, 34) définissant des positions de repos pour lesdits pistons, pour lesquelles les chambres de travail (24, 26) communiquent avec un réservoir (42), et ledit second ressort de rappel (30) étant monté dans une cage télescopique (36) qui le maintient au repos sous un état de pré-compression déterminé, caractérisé en ce que ladite cage télescopique (36) est réalisée au moyen de deux pièces (52a, 52b) sensiblement identiques en forme de U imbriquées en opposition, ledit second ressort (30) étant monté autour desdites pièces.

2. Maître-cylindre tandem selon la revendication 1, caractérisé en ce que lesdites pièces (52a, 52b) sont formées chacune d'une embase (54a, 54b) de laquelle s'étendent perpendiculairement deux bras (56a, 58a-56b, 58b) qui se terminent par des languettes (60a, 62a-60b, 62b) coudées vers l'extérieur.

3. Maître-cylindre tandem selon la revendication 2, caractérisé en ce que lesdites embases (54a, 54b) comportent des ouvertures (64a, 64b) au travers desquelles se projette un prolongement axial (66) de l'un ou l'autre des deux pistons (16, 22).

4. Maître-cylindre tandem selon la revendication 2 ou 3, caractérisé en ce que lesdits pistons comportent des épaulements (68, 70) engagés entre les bras (56a, 58a-56b, 58b) desdites pièces (52a, 52b).

5. Sous-ensemble unitaire de ressort précomprimé pour maître-cylindre tandem selon la revendication 1, comprenant un ressort (30) monté dans une cage télescopique (36), caractérisé en ce que ladite cage télescopique (36) est réalisée au moyen de deux pièces (52a, 52b) sensiblement identiques en forme de U imbriquées en opposition, ledit ressort (30) étant monté autour desdites pièces (52a, 52b).

6. Sous-ensemble unitaire selon la revendication 5, caractérisé en ce que lesdites pièces (52a, 52b) sont formées chacune d'une embase (54a-54b) dans laquelle s'étendent perpendiculairement deux bras (56a, 58a-56b, 58b) qui se terminent par des languettes (60a, 62a-60b, 62b) coudées vers l'extérieur, lesdites pièces (52a, 52b) étant imbriquées de telle sorte que l'embase (54a-54b) de chaque pièce est reçue entre les bras (56b, 58b-56a, 58a) de l'autre pièce, ledit ressort (30) étant monté autour des bras des deux pièces et prenant appui sur les languettes (60a, 62a) d'une pièce à une extrémité et sur les languettes (60b, 62b) de l'autre pièce à l'autre extrémité.

## Claims

1. Tandem master cylinder comprising a casing (12) provided with a blind bore (14) slidingly receiving a first piston (16) disposed adjacent the open side of the blind bore and manually displaceable from the exterior towards the interior of the bore, and a second piston (22) disposed between the first piston (16) and the bottom (20) of the bore, a first work chamber (24) being defined between the two pistons and a second work chamber (26) being defined between the second piston and the bottom (20) of the bore, a first return spring (28) being interposed between the bottom of the bore and the second piston (22), and a second return spring (30) being interposed between the two pistons, said springs biasing the pistons towards the exterior of the bore in the direction of abutments (32, 34) defining rest positions for the pistons, for which the work chambers (24, 26) communicate with a reservoir (42), and said second return spring (30) being mounted in a telescopic cage (36) which maintains it at rest under a predetermined pre-compressed condition, characterized in that said telescopic cage (36) comprises two members (52a, 52b) of substantially identical U-shape intercalated in opposite directions, said second spring (30) being mounted around said members.

2. Tandem master cylinder according to claim 1, characterized in that said members (52a, 52b) each are provided with a base (54a, 54b), two arms (56a, 58a-56b, 58b) extending perpendicularly therefrom and terminating in tongues (60a, 62a-60b, 62b) which are bent outwards.

3. Tandem master cylinder according to claim 2, characterized in that said bases (54a, 54b) include openings (64a, 64b), an axial extension (66) of one or the other of said two pistons (16, 22) projecting through said openings.

4. Tandem master cylinder according to claim 2 or claim 3, characterized in that said pistons comprise shoulders (68, 70) engaged between the arms (56a, 58a-56b, 58b) of said members (52a, 52b).

5. Unitary subassembly including a pre-compressed spring for a tandem master cylinder according to claim 1, comprising a spring (30) mounted in a telescopic cage (36), characterized in that said telescopic cage (36) comprises two members (52a, 52b) of substantially identical U-shape intercalated in opposite directions, said second spring (30) being mounted around said members.

6. Unitary subassembly according to claim 5, characterized in that said members (52a, 52b) each are formed with a base (54a, 54b), two arms (56a, 58a-56b, 58b) extending perpendicularly therefrom and terminating in tongues (60a, 62a-60b, 62b) which are bent outwards, said members (52a, 52b) being intercalated such that the base (54a-54b) of each member is received between the arms (56b, 58b-56a, 58a) of the other member, said spring (30) being mounted about the arms of the two members and being in abutting engagement with the tongues (60a, 62a) of one member at one extremity and with the tongues (60b, 62b) of the other member at the other extremity.

## Patentansprüche

1. Tandem-Hauptzylinder mit einem Gehäuse (12), das mit einer Sackbohrung (14) versehen ist, in dem ein erster Kolben (16) und ein zweiter Kolben (22) gleitend gelagert sind, wobei der erste Kolben (16) auf der offenen Seite der Sackbohrung angeordnet und manuell von außen in das Innere der Bohrung verschiebbar ist und der zweite Kolben zwischen dem ersten Kolben (16) und dem Boden (20) der Sackbohrung angeordnet ist, einer ersten Arbeitskammer (24), die zwischen den beiden Kolben gebildet ist, und einer zweiten Arbeitskammer (26), die zwischen dem zweiten Kolben und dem Boden (20) der Sackbohrung gebildet ist, einer ersten Rückholfeder (28), die zwischen dem Boden der Sackbohrung und dem zweiten Kolben (22) angeordnet ist, und einer zweiten Rückholfeder (30), die zwischen den beiden Kolben angeordnet ist, wobei die Federn die Kolben in auswärtiger Richtung bezüglich der Bohrung auf Anschläge (32, 34) zu vorspannen, die Ruhestellungen für die Kolben definieren, bei denen die Arbeitskammern (24, 26) mit einem Reservoir (42) in Verbindung stehen, und wobei die zweite Rückholfeder (30) in einem teleskopierbaren Käfig (36) angebracht ist, der sie in Ruhelage unter einem Zustand einer vorgegebenen Vorspannung hält, dadurch gekennzeichnet, daß der teleskopierbare Käfig (36) mittels zweier Teile (52a, 52b) hergestellt ist, die im wesentlichen die gleiche U-Form haben und entgegengerichtet ineinandergreifen, wobei die zweite Feder (30) um diese Teile herum angeordnet ist.

2. Tandem-Hauptzylinder nach Anspruch 1, dadurch gekennzeichnet, daß diese Teile (52a, 52b) jeweils mit einer Basis (54a, 54b) ausgebildet sind, von der sich senkrecht dazu zwei Arme (56a, 58a-56b, 58b) erstrecken, die in nach außen abgebogenen Zungen (60a, 62a-60b, 62b) enden.

3. Tandem-Hauptzylinder nach Anspruch 2, dadurch gekennzeichnet, daß die Basen (54a, 54b) Öffnung (64a, 64b) aufweisen, durch die sich eine axiale Verlängerung (66) des einen oder anderen der beiden Kolben (16, 22) erstreckt.

4. Tandem-Hauptzylinder nach Anspruch 2 oder 3, dadurch gekennzeichnet, daß die Kolben Schultern (68, 70) aufweisen, an denen die Arme (56a, 58a-56b, 58b) der besagten Teile (52a, 52b) angreifen.

5. Baueinheit mit vorgespannter Feder für einen Hauptzylinder nach Anspruch 1, mit einer in einem teleskopierbaren Käfig (36) angeordneten Feder (30), dadurch gekennzeichnet, daß der teleskopierbare Käfig (36) mittels zweier Teile (52a, 52b) hergestellt ist, die im wesentlichen die gleiche U-Form haben und entgegengerichtet ineinandergreifen, wobei die zweite Feder (30) um diese Teile herum angeordnet ist.

6. Baueinheit nach Anspruch 5, dadurch gekennzeichnet, daß die besagten Teile (52a, 52b) jeweils mit einer Basis (54a-54b) versehen sind, von der sich senkrecht dazu zwei Arme (56a, 58a-56b-58b) erstrecken, die in nach außen abgebogenen Zungen (60a, 62a-60b, 62b) enden, wobei diese Teile (52a, 52b) derart ineinandergreifen, daß die Basis (54a-54b) jedes Teils zwischen den Armen (56b, 58b-56a-58a) des anderen Teiles sitzt, wobei die Feder (30) um die Arme der beiden Teile herum angeordnet ist und mit einem Ende an den Zungen (60a, 62a) eines Teils abgestützt ist und mit dem anderen Ende an den Zungen (60b, 62b) des anderen Teiles abgestützt ist.

FIG_1

0 095 404

FIG_2

FIG_3